# EUROPÄISCHE PATENTSCHRIFT

(11) **EP 1 770 456 B1**
(45) Veröffentlichungstag und Bekanntmachung des Hinweises auf die Patenterteilung: **04.03.2009**
(21) Anmeldenummer: 05021187.9
(22) Anmeldetag: 28.09.2005
(51) Int. Cl.: G05B 19/05

(54) **Peripheriebaugruppe für ein Automatisierungsgerät**
Peripheral module for an automation apparatus
Unité périphérique pour un système automatisé

(43) Veröffentlichungstag der Anmeldung: 04.04.2007
(73) Patentinhaber: SIEMENS AKTIENGESELLSCHAFT, 80333 München (DE)
(72) Erfinder: Engl, Werner, 92706 Luhe-Wildenau (DE); Grosser, Stefan, 92253 Schnaittenbach (DE); Hirmer, Gerald, 92708 Mantel (DE); Maier, Mario, 92266 Ensdorf (DE)

(56) Entgegenhaltungen:
- US-A- 5 777 557
- US-B1- 6 411 532
- US-B1- 6 605 957

## Beschreibung

Die Erfindung betrifft eine Peripheriebaugruppe für ein Automatisierungsgerät mit mindestens einem Versorgungskontakt, mindestens einem als Digitaleingang fungierenden Signalkontakt und mindestens einem Massekontakt zum Anschluss eines baugruppenexternen Sensors zumindest an den Signalkontakt. Als Peripheriebaugruppe wird dabei jede Baugruppe oder jedes Modul in einem oder für ein Automatisierungsgerät bezeichnet, das zum Anschluss externer Peripherie, also z.B. Aktoren und/oder Sensoren bestimmt und vorgesehen ist.

Der Begriff Peripheriebaugruppe wird dabei im Folgenden entweder für die einzelne Baugruppe oder das einzelne Modul, jeweils mit Anschlussmöglichkeit für externe Peripherie, wie z.B. Schalter, Grenzwertmelder, elektrische, hydraulische oder pneumatische Aggregate und dergleichen, oder, insbesondere im Falle von so genannten Kompaktautomatisierungsgeräten, also Geräten bei denen die Steuerungs- und Verarbeitungsfunktionalität und die Möglichkeiten zum Peripherieanschluss in einem Gerät kombiniert sind, für das gesamte Automatisierungsgerät verwendet.

Automatisierungsgeräte der Eingangs genannten Art, insbesondere in einer Ausführungsform als modulare Automatisierungsgeräte sind allgemein bekannt, z.B. in Form der Automatisierungsgeräte die von der Anmelderin unter der Marke SIMATIC angeboten werden. Aus diesen Automatisierungsgeräten sind auch als Einzelmodule (Einzelbaugruppen) ausgeführte Peripheriebaugruppen, insbesondere Eingabebaugruppen oder kombinierte Ein-/Ausgabebaugruppen als konkretes Beispiel für eine Peripheriebaugruppe bekannt.

Die Erfindung bezieht sich speziell auf eine Peripheriebaugruppe mit mindestens einem als Digitaleingang fungierenden Signalkontakt. Bei einer solchen Peripheriebaugruppe handelt es sich entsprechend um eine Peripheriebaugruppe mit Digitaleingabe-Funktionalität. Solche Baugruppen werden häufig mit einer Mehrzahl, z.B. 16 oder 32, von Digitaleingängen ausgeführt und entsprechend als Digitaleingabebaugruppe bezeichnet. Die Digitaleingabebaugruppe ist also eine Sonderform einer Peripheriebaugruppe mit ausschließlich digitaler Eingabefunktionalität. Daneben können auch Mischformen, also z.B. Digitalein- / Ausgabebaugruppen oder Digitaleingabe- und Analogeingabebaugruppen mindestens einen als Digitaleingang fungierenden Signalkontakt aufweisen. Im Folgenden werden die von der Erfindung erfassten Peripheriegeräte entsprechend auch kurz unter dem Begriff Digitaleingabebaugruppe oder Eingabebaugruppe bzw. Baugruppe zusammengefasst, wobei als Kriterium stets der mindestens eine als Digitaleingang fungierende Signalkontakt im Vordergrund steht.

Die im Stand der Technik bekannten Eingabebaugruppen basieren auf dem Prinzip, dass über einen Digitaleingang, also den mit dem Signalkontakt verknüpften Eingangskanal, bei aktiviertem angeschlossenem Sensor ein Strom in die Baugruppe fließt. Im einfachsten Fall wird bei vorhandenem Stromfluss der Sensor als aktiviert erkannt. Entsprechend wird bei nicht vorhandenem Stromfluss der Sensor als deaktiviert erkannt. Es kann jedoch auch bei deaktiviertem Sensor ein Strom in die Baugruppe fließen, so dass üblicherweise der Status des Sensors an der Höhe einer Spannung erkannt wird, vorzugsweise anhand des Überschreitens bestimmter vorgegebener oder vorgebbarer Schwellwerte für die Spannungshöhe, die zum Treiben eines Stroms über den Signalkontakt erforderlich ist.

Dieses Standardprinzip ist insoweit nicht ganz optimal, als durch den Eingangsstrom eine Verlustleistung innerhalb der Baugruppe entsteht. Bei gemäß der IEC 61131-2 vorgegebenen Standards für Spannungs- und Stromwerte an Digitaleingängen (Typ 1: High-Signal im Spannungsbereich 15V .. 30V, Eingangsstrom bei High-Signal: min. 2mA; Typ 2: High-Signal im Spannungsbereich 11V .. 30V, Eingangsstrom bei High-Signal: min. 6mA) beträgt die Verlustleistung an einem Eingangskanal des o. g. zweiten Typs, der auch zum Anschluss sog. BEROs (kontakt- und berührungslos arbeitender Sensor) geeignet ist, mindestens 30V x 6mA = 180mW. Dabei variiert die Verlustleistung noch je nach elektrischer Schaltung des Eingangskanals. Bei einem mittels einer passiven Schaltung realisierten Eingangskanal kommt es zu einer Verlustleistung von 30V x 16.4mA = 492mW. Das vorangehende Zahlenbeispiel (Verlustleistung: 180mW) bezieht sich auf eine "aktive Schaltung" mit sog. Stromsenke.

Die oben exemplarisch ausgewiesene Verlustleistung entsteht zudem pro Eingangskanal. D.h. bei einer Baugruppe mit 32 Eingangskanälen summiert sich die Verlustleistung zu 32 x 180mW = 5,76W (32 x 492mW = 15,74W). Allerdings ist im Hinblick auf eine wünschenswerte Verlustleistungsreduzierung eine Reduzierung der Höhe der Eingangsströme nicht möglich, da ansonsten eine Erfüllung der Vorgaben nach IEC 61131-2 nicht möglich ist.

Darüber hinaus ist in Betracht zu ziehen, dass Überlegungen angestrengt werden, 64-kanalige Baugruppen zu entwickeln. Hochgerechnet ergeben sich dabei Verlustleistungen von 64 x 180mW = 11,5W und 64 x 492mW = 31,5W für die Realisierung sämtlicher Eingänge mit passiver bzw. aktiver Schaltung.

Die Verlustleistung muss aus der Baugruppe abgeführt werden und bedingt dadurch eine bestimmte Baugröße für die Baugruppe. Da die theoretisch erforderlichen Baugrößen dem Trend zur Miniaturisierung widersprechen, wird häufig ein sog. "Derating" der Baugruppen vorgenommen, d.h. der Anwender muss dafür Sorge tragen, dass nur eine bestimmte, vorgegebene Anzahl von Eingangskanälen gleichzeitig (dauerhaft) eingeschaltet ist. In ungünstigen Fällen kann dies die tatsächliche Verwendbarkeit z.B. nur der Hälfte der vorhandenen Eingänge bedeuten.

Eine Alternative hierzu beschreibt die US 6,605,957, aus welcher ein "logic input circuit" für ein Steuersystem mit einem aus einer Diode, einem Widerstand, einem Kondensator und einer "battery" gebildeten "energy recovery circuit" bekannt ist. Wenn eine an einem Eingang E1 des "logic input circuit" anliegende externe Spannung größer als eine Spannung der "battery" ist, fließt in Durchlassrichtung der Diode Strom in Richtung der "battery", so dass ein Teil einer über E1 eingehenden Energie von dem "energy recovery circuit" aufgefangen wird.

Die Aufgabe der Erfindung liegt entsprechend darin, die baugruppenseitig anfallende Verlustleistung zu reduzieren um damit z.B. Baugruppen mit verringerter Baugröße oder Baugruppen mit zumindest im Wesentlichen gleich bleibender Baugröße, bei denen jedoch die gesamte oder zumindest eine höhere Anzahl von Eingangskanälen gleichzeitig verwendbar ist, realisieren zu können.

Die Erfindung schlägt zur Vermeidung oder zumindest Verringerung der o.g. Nachteile und zur Lösung der o.g. Aufgabe oder zur Lösung von Einzelaspekten der o.g. Aufgabe eine Eingangsbaugruppe mit einem verlustleistungsoptimierten Digitaleingang oder einen solchen verlustleistungsoptimierten Digitaleingang vor. Bei einer Peripheriebaugruppe der eingangs genannten Art ist oder sind dazu Mittel zur Ausspeisung (Ausspeisungsmittel) einer über zumindest den Signalkontakt einspeisbaren elektrischen Energie vorgesehen.

Die über den Signalkontakt einspeisbare elektrische Energie ist dabei die elektrische Energie, die im Betrieb der Baugruppe aufgrund des Eingangsstroms über den Digitaleingang (wie oben beschrieben) die Ursache für die baugruppenintern anfallende Verlustleistung ist.

Die Erfindung geht dabei von der Erkenntnis aus, dass immer wenn ein Digitaleingang Strom aufnimmt, also Strom in die Baugruppe über den Signalkontakt aufgrund einer außen (über dem Sensor) anliegenden Spannung eingespeist wird, innerhalb der Baugruppe eine Verlustleistung entsteht. Anstatt diese Leistung wie bisher üblich in Wärme umzusetzen, wird sie mittels des oder der Ausspeisungsmittel auf ein nutzbares Spannungsniveau gebracht und von der Baugruppe wieder ausgespeist, d.h. als Ausgangsspannung und Ausgangsstrom wieder abgegeben. Die Baugruppe gibt damit elektrische Energie in Form von Strom und/oder Spannung aus. Sie erzeugt praktisch eine Ausgangs-Leistung aus der über den oder die Signalkontakt(e) eingespeisten Leistung und verhindert oder zumindest verringert dadurch das Entstehen von Verlustleistung im Bereich der Baugruppe.

Zum Anschluss des Sensors ist neben dem Signalkontakt der Versorgungskontakt vorgesehen. Dabei erfolgt das Ausspeisen der elektrischen Energie ebenfalls über diesen Versorgungskontakt. Ein Teil der als Eingangsstrom durch die Baugruppe aufgenommenen elektrischen Energie wird damit unmittelbar zur elektrischen Versorgung des jeweiligen Sensors zurückgeführt.

Da ferner das oder die Ausspeisungsmittel als Schaltregler ausgeführt ist bzw. ausgeführt sind, lässt sich gewährleisten, dass die elektrische Energie, also der Strom und die Spannung, den bzw. die die Baugruppe insbesondere über den Versorgungskontakt, wieder ausspeist, mit hohem Wirkungsgrad und geringer Verlustleistung erzeugt wird. Mit einem solchen Schaltregler ist bei geeigneter Konfiguration und Parametrierung möglich, dass die ausgespeiste Ausgangsspannung so groß wird, dass sie auf eine ebenfalls an den Versorgungskontakt extern angeschlossene Baugruppenversorgung (z.B. P24) einen Strom hinaustreiben kann. Der abgegebene, ausgespeiste Strom hängt dabei von der Leistung ab, die am jeweiligen Digitaleingang in die Baugruppe eingespeist wird.

Zum Erreichen eines solchen hohen Wirkungsgrades ist das oder sind die Ausspeisungsmittel bevorzugt in Form eines getakteten Hochstellers mit Konstantstromsenke ausgeführt oder der Schaltregler umfasst zumindest einen solchen getakteten Hochsteller mit Konstantstromsenke.

Die Verluste können durch das Konzept gemäß der Erfindung auf etwa 30% der bei den bisherigen Lösungskonzepten anfallenden Verluste reduziert werden. Dies bedeutet, dass die dreifache Anzahl von Digitaleingängen bei gleicher Baugröße realisiert werden kann. Dadurch werden hochkanalige Baugruppen ohne Derating realisierbar.

Bevorzugt ist oder sind das bzw. die Ausspeisungsmittel, also insbesondere der Schaltregler bzw. der getaktete Hochsteller mit Konstantstromsenke, durch Integration in einen sog. ASIC realisiert. Die Verwendung eines ASICs hat den Vorteil, dass zusätzlich noch die Integration von Funktionalität zur Kurzschluss- und Drahtbruchüberwachung für den jeweiligen Digitaleingang in den ASIC integrierbar ist.

Zum Auswerten des jeweiligen Status des anschließbaren oder angeschlossenen Sensors ist vorgesehen, dass das oder die Ausspeisungsmittel Verarbeitungsfunktionalität umfasst bzw. umfassen, derart dass anhand einer Spannung, die im Betrieb zum Treiben eines Stroms über den Signalkontakt erforderlich ist, insbesondere anhand des Überschreitens vorgegebener oder vorgebbarer Schwellwerte für die sich ergebende Spannung, der Status des an den Signalkontakt angeschlossenen Sensors erkennbar ist. Die Erkennung von Highpegel und Lowpegel (entsprechend aktiviertem bzw. nicht aktiviertem Eingangskanal/Sensor) erfolgt dabei vorteilhaft wie bei bisherigen Eingabebaugruppen anhand der Spannungshöhe bei konstantem Strom über den Signalkontakt. Damit ist vorteilhaft auch erreicht, dass für Anwender der gemäß der Erfindung ausgeführten Geräte der Anschluss von Prozessperipherie unverändert erfolgt, wobei der jeweilige Sensor insbesondere in unveränderter Weise von P24, also dem Versorgungskontakt, zum Signalkontakt angeschlossen wird.

Weiter bevorzugt ist vorgesehen, dass in Abhängigkeit vom mittels der Verarbeitungsfunktionalität des Ausspeisungsmittels erkennbaren Status des Sensors ein Auswertezweig angesteuert wird, der zum Transfer des erkannten Status des Sensors an eine Verarbeitungseinheit vorgesehen ist. Dabei ist die Verwendung eines Auswertezweiges komplementär zu einer Lösung bei der die Verarbeitungsfunktionalität Speichermittel umfasst, aus denen der erkannte Status des angeschlossenen Sensors direkt ablesbar ist. Mit dem Auswertezweig erfolgt der Statustransfer noch auf der Ebene "primärer elektrischer Größen", also durch Stromfluss und nicht bereits auf Ebene digitaler Daten zur Kodierung des logischen Status des Digitaleingangs.

Zur galvanischen Trennung umfasst der Auswertezweig bevorzugt einen Optokoppler. Des Weiteren kann gemäß einer vorteilhaften Ausführungsform vorgesehen sein, dass der Auswertezweig ein Anzeigeelement, z.B. eine LED, umfasst, mit dem der erkannte Status des Sensors, also der interne logische Status des Digitaleingangs angezeigt wird.

Gemäß einer weiteren bevorzugten Ausführungsform ist vorgesehen, dass die Peripheriebaugruppe als Vorsorgungskontakt einen ersten und einen zweiten Versorgungskontakt umfasst, wobei der erste Versorgungskontakt zur Versorgung der Peripheriebaugruppe mit elektrischer Energie vorgesehen ist, wobei der zweite Versorgungskontakt zur Ausspeisung elektrischer Energie durch das oder die Ausspeisungsmittel und zum Anschluss des Sensors vorgesehen ist und wobei über den Signalkontakt einspeisbare elektrische Energie über den zweiten Versorgungskontakt ausspeisbar ist. Am zweiten Versorgungskontakt ist dann eine Geberversorgung abgreifbar, wobei die Begriffe Geber und Sensor (entsprechend auch Geberversorgung, Sensorversorgung) synonym zu verstehen sind. Die Geberversorgung ist also zur elektrischen Versorgung des jeweils angeschlossenen Sensors vorgesehen.

Bevorzugt wird die Geberversorgung dabei aus zwei Quellen gespeist, indem das oder die Ausspeisungsmittel zur Entnahme der über den zweiten Versorgungskontakt ausspeisbaren elektrischen Energie (Geberversorgung) von einem über den Signalkontakt einspeisbaren Strom einerseits und von einem über den ersten Versorgungskontakt einspeisbaren elektrischen Strom andererseits vorgesehen sind. Bevorzugt erfolgt die Speisung der Geberversorgung dabei primär aus der Leistung, die über den jeweiligen Digitaleingang in die Baugruppe eingespeist wird. Sekundär erfolgt die Speisung der Geberversorgung aus der am ersten Versorgungskontakt anliegenden Baugruppenversorgung, z.B. P24.

Die Erfindung betrifft neben der bisher im Wesentlichen beschriebenen Vorrichtung, also der Peripheriebaugruppe oder einem Digitaleingang einer solchen Peripheriebaugruppe, in gleicher Weise auch ein Verfahren zum Betrieb einer solchen Peripheriebaugruppe. Danach ist vorgesehen, dass das oder die Ausspeisungsmittel einen Strom über den Signalkontakt aufnimmt bzw. aufnehmen, dass die Auswertung des Status eines an den Signalkontakt, also den Eingangskontakt des jeweiligen Digitaleingangs, angeschlossenen Sensors anhand einer Spannung, die im Betrieb zum Treiben eines Stroms über den Signalkontakt erforderlich ist, insbesondere anhand des Überschreitens vorgegebener oder vorgebbarer Schwellwerte für die sich ergebende Spannungshöhe, erfolgt und dass zumindest ein Teil des aufgenommenen Stroms durch das oder die Ausspeisungsmittel über den Versorgungskontakt wieder ausgespeist wird.

Das erfindungsgemäße Verfahren löst ebenfalls die Eingangs genannte Aufgabe und verwirklich die aufgabengemäß angestrebten Vorteile.

Bevorzugt ist darüber hinaus vorgesehen, dass zum Transfer des erkannten Status des angeschlossenen Sensors an eine Verarbeitungseinheit je nach Status ein Auswertezweig aktiviert oder deaktiviert wird, der insbesondere einen Optokoppler, insbesondere einen Optokoppler und ein Anzeigeelement, umfasst. Hinsichtlich der Vorteile dieser bevorzugten Ausführungsform des Verfahrens wird auf die weiter oben erläuterten Vorteile im Zusammenhang mit der korrespondierenden Vorrichtung verwiesen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen
- Fig. 1: eine Prinzipdarstellung einer Schaltung einer Peripheriebaugruppe mit einem Digitaleingang gemäß dem Stand der Technik,
- Fig. 2: eine Prinzipdarstellung einer Schaltung einer Peripheriebaugruppe mit einem Digitaleingang gemäß der Erfindung und
- Fig. 3: eine Prinzipdarstellung einer Schaltung einer Peripheriebaugruppe mit einem Digitaleingang gemäß einer alternativen Ausführungsform der Erfindung.

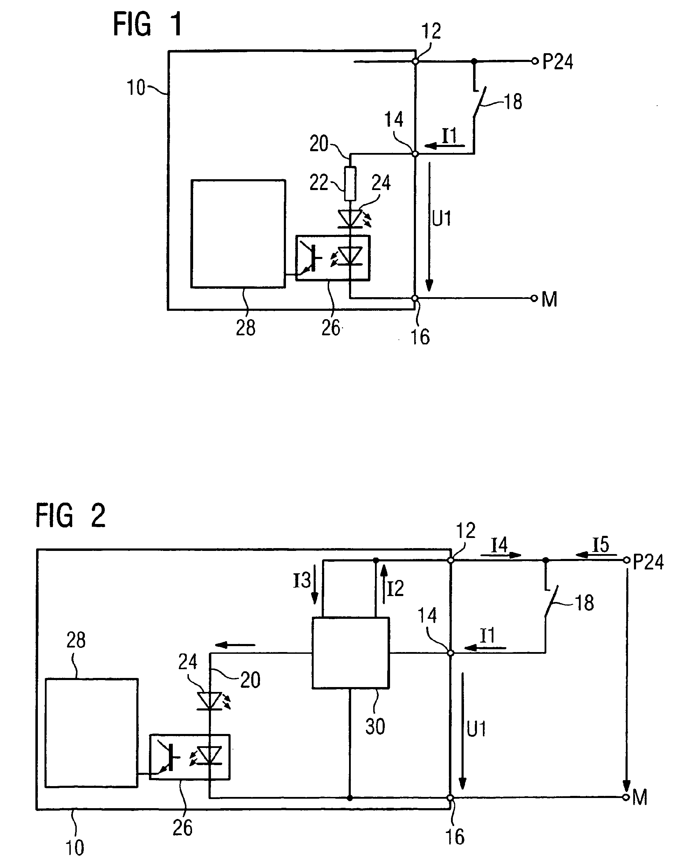

Fig. 1 zeigt am Beispiel einer Digitalbaugruppe eine Peripheriebaugruppe 10 mit einem Versorgungskontakt 12, einem Signalkontakt 14 und einem Massekontakt 16. Als Sensor 18 ist ein Schalter gezeigt. Dieser legt in geschlossenem Zustand das am Vorsorgungskontakt 12 anliegende Versorgungspotential P24, also z.B. U_{P24}, an den Digitaleingang, also den Signalkontakt 14. In die Baugruppe 10 fließt über den Signalkontakt 14 ein Eingangsstrom 11, bei über dem Signal- und dem Massekontakt 14, 16 anliegender Spannung U1.

Baugruppenintern umfasst der Digitaleingang einen Auswertezweig 20, der im dargestellten Beispiel einen Widerstand 22, ein Anzeigeelement 24, z.B. eine LED, und einen Optokoppler 26 umfasst. Der Optokoppler 26 ist als Transferelement zum Transfer des jeweiligen Status des angeschlossenen Sensors 18 an eine Verarbeitungseinheit 28 vorgesehen. Mit dem Optokoppler 26 ist innerhalb der Peripheriebaugruppe eine galvanische Trennung zwischen einem ersten Schaltungsteil, das über den Versorgungs-, den Signal- oder den Massekontakt von außen beeinflussbar ist und einem davon unabhängigen zweiten Schaltungsteil zur Datenverarbeitung und/oder -übermittlung erreicht. Das zweite Schaltungsteil ist dabei insbesondere zur Auswertung der jeweils erkannten Stati der einzelnen Kanäle und/oder zur Abwicklung der Übermittlung der Daten, die durch Kombination der in einer Baugruppe erfassbaren Stati zu entsprechenden Datenworten anfallen, über einen Bus entsprechend dem jeweiligen Busprotokoll vorgesehen.

Innerhalb der Baugruppe 10 entsteht am Digitaleingang die Verlustleistung P1 = I1 × U1 = 6mA × 30V = 180mW. Diese Verlustleistung entsteht pro Kanal. D.h. bei einer Baugruppe 10 mit 32 Eingangskanälen (32-kanalige Baugruppe) ergibt sich eine Gesamtverlustleistung von 32 × 0,18W = 5,76W.

Fig. 2 zeigt eine Peripheriebaugruppe 10 gemäß der Erfindung. Analog zur vorangehenden Darstellung in Fig. 1 ist an den mindestens einen Digitaleingang der Baugruppe 10, also zumindest an den Signalkontakt 14, als Sensor 18 ein Schalter angeschlossen. Dieser legt in geschlossenem Zustand das am Versorgungskontakt 12 anliegende Potential an den Signalkontakt 14. In die Baugruppe 10 fließt der Eingangsstrom I1 bei einer über dem Signal- und dem Massekontakt 14, 16 anliegenden Spannung U1.

Die Baugruppe 10 nimmt am Digitaleingang, also über den Signalkontakt 14, als Eingangsstrom I1 einen Strom von z.B. 6mA auf. Der Eingangsstrom I1 ist ein Beispiel für in die Baugruppe 10 eingespeiste elektrische Energie. Entsprechend wird der Eingangsstrom I1 im Folgenden auch allgemein als eingespeiste elektrische Energie bezeichnet.

Mit diesem Eingangsstrom I1 ist eine grundsätzlich baugruppenintern anfallende Verlustleistung verbunden, die gemäß der Erfindung dadurch vermieden oder zumindest verringert wird, dass Mittel 30 zur Ausspeisung (Ausspeisungsmittel) der zumindest über den Signalkontakt 14 eingespeisten oder einspeisbaren elektrischen Energie vorgesehen sind.

Als Ausspeisungsmittel 30 ist ein Schaltregler 30, insbesondere in einer Ausführung als getakteter Hochsteller mit Konstantstromsenke, vorgesehen. Der Schaltregler 30 regelt den Eingangsstrom I1 derart, dass er konstant auf 6mA gehalten wird. Bei einer über dem Signal- und dem Massekontakt 14, 16 anliegenden Spannung U1 von z.B. 30 V nimmt die Baugruppe 10 am Digitaleingang, also über den Signalkontakt 14, die Leistung P_{auf1} = I1 × U1 = 6mA × 30V = 180mW auf. Diese Leistung wird pro Kanal aufgenommen. Bei einer 32-kanaligen Baugruppe ergibt sich eine Gesamtverlustleistung von P_{auf32} = 32 × 0,18W = 5,76W.

Der Schaltregler 30 speist zumindest einen Teil dieser aufgenommenen Leistung oder einen Teil dieser eingespeisten elektrischen Energie auf das am Versorgungskontakt 12 anliegende Versorgungspotential, z.B. P24, aus. Die ausgespeiste elektrische Energie ist in Fig. 2 als vom Schaltregler 30 ausgespeister Strom 12 dargestellt. Die abgegebene Leistung errechnet sich zu P_{ab} = U_{P24} × I2. Die abgegebene Leistung P_{ab} wird innerhalb der Baugruppe 10 durch den Schaltregler 30, insbesondere den getakteten Hochsteller, aus der aufgenommenen Leistung P_{auf32} erzeugt. Wenn diese Erzeugung mit einem Wirkungsgrad von z.B. 70% erfolgt, fällt in der Baugruppe 10 als Verlustleistung nur noch 0.3 × 5,76W = 1,7W an.

Der Eigenverbrauch des Schaltreglers 30 wird über einen Strom aus der am Versorgungskontakt 12 anliegenden Versorgungsspannung, z.B. P24, gedeckt und ist in der Darstellung mit I3 bezeichnet. Im Betrieb wird aus der die Versorgungsspannung liefernden Stromversorgung P24 nur noch ein Strom entnommen, der zur Deckung der Verluste benötigt wird und der in der Zeichnung mit 15 dargestellt ist.

Eine Beispielrechnung verdeutlicht die sich ergebenden Verhältnisse:
- Eingangsstrom bei einem Kanal:
   I1 = 6mA pro Kanal.
- Eingangsstrom bei 32 Kanälen:
   I1 = 32 × 6mA = 192mA.
- Leistung, die an 32 Eingängen bei eine mit U1 bezeichneten Spannung in Höhe von 30V über dem Signalkontakt 14 und dem Massekontakt 16 aufgenommen wird:
   P^{auf} = I1 × U2 = 192mA × 30V = 5,76W.
- Angenommener Wirkungsgrad der Ausspeisungsmittel 30, also z.B. des Schaltreglers 30: 70%.
- Verlustleistung innerhalb der Baugruppe:
   P^{v} = 0,3 × P^{auf} = 0,3 × 5,76W = 1,73W.
- Leistung, die in Form von elektrischer Energie über den Versorgungskontakt 12 im Wege eines vom Ausspeisungsmittel 30 erzeugten Stroms ausgespeist werden kann:
   P^{ab} = 0,7 × P^{auf} = 0,7 × 5,76W = 4,03W.
- Bei einer am Versorgungskontakt 12 anliegenden Versorgungsspannung aus der Stromversorgung, z.B. P24, von z.B. U_{P24} = 30V berechnet sich der ausgespeiste Strom I4 zu I4 = P_{ab} / U_{P24} = 4,03W / 30V = 134mA.
- Aus der Stromversorgung P24, also z.B. einem entsprechenden Netzteil wird ein Strom I5 in Höhe von I1 - I4 aufgenommen:
   I5 = 192mA - 134mA = 58mA.

Innerhalb der Baugruppe 10 entstehend damit pro Digitaleingang eine Verlustleistung von 0,3 × 6mA × 30V = 54mW. Bei einer 32-kanaligen Baugruppe ergibt sich damit eine Gesamtverlustleistung von 32 × 54mW = 1,73W. Zum Vergleich dazu entsteht bei einer 32-kanaligen Baugruppe wie sie bisher entsprechend dem Stand der Technik bekannt ist, eine Gesamtverlustleistung von 5,67W.

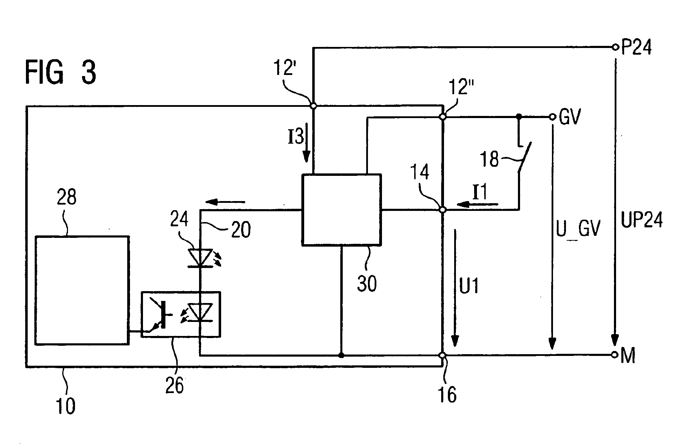

Fig. 3 zeigt eine Peripheriebaugruppe 10 gemäß einer alternativen Ausführungsform der Erfindung. Im Unterschied zu der Ausführung gemäß Fig. 2 weist die Baugruppe in 10 in der Ausführung gemäß Fig. 3 als Versorgungskontakt 12 einen ersten und einem zweiten Versorgungskontakt 12', 12" auf. Der erste Versorgungskontakt 12' ist zur Versorgung der Peripheriebaugruppe 10 mit elektrischer Energie vorgesehen. Der zweite Versorgungskontakt 12" ist zur Ausspeisung elektrische Energie durch das oder die Ausspeisungsmittel 30 sowie zum Anschluss des Sensors 18 vorgesehen. Dazu ist eine Ausspeisung der über den Signalkontakt 14 eingespeisten oder einspeisbaren elektrischen Energie über den zweiten Versorgungskontakt 12" vorgesehen.

Die Baugruppe 10 wird also über die am ersten Versorgungskontakt 12' anliegende Baugruppenversorgung P24 gespeist. Mittels des oder der Ausspeisungsmittel 30 erzeugt die Baugruppe 10 eine Geber- oder Sensorversorgung, die aus zwei Quellen gespeist wird, nämlich primär aus der Leistung, also der elektrischen Energie die über die Digitaleingänge, also über den oder jeden Signaleingang 14, in die Baugruppe 10 eingespeist wird und sekundär aus der am ersten Versorgungskontakt 12' anliegenden Spannung, und die in Fig. 3 mit GV bezeichnet ist. Aus der am ersten Versorgungskontakt 12' anliegenden Spannung wird allerdings nur der Anteil bezogen, der zur Deckung des Eigenverbrauchs aufgrund unvermeidbarer Verluste der Schaltung, insbesondere der Ausspeisungsmittel 30, mit einem Wirkungsgrad von notwendigerweise weniger als 100% benötigt wird. Als Sensor 18 ist an den Digitaleingang, also an den Signalkontakt 14 der Baugruppe 10, ein Schalter angeschlossen. Dieser legt im geschlossenen Zustand das Potential GV an den Digitaleingang. In die Baugruppe fließt damit der Eingangsstrom 11, bei einer über dem Signalkontakt 14 und dem Massekontakt 16 anliegenden Spannung U1. Am Digitaleingang nimmt die Baugruppe 10 einem Strom von I1 = 6mA auf. Der Schaltregler als Ausspeisungsmittel 30 regelt dem Strom 11 derart, dass er konstant bei 6mA gehalten wird. Bei einer anliegenden Spannung vom U1 = 30V nimmt die Baugruppe 10 am Digitaleingang die Leistung P_{auf1} = I1 × U1 = 6mA × 30V = 180mW auf. Diese Leistung wird pro Kanal aufgenommen. Bei einer z.B. 32-kanaligen Baugruppe sind das dann P_{auf32} = 32 × 0,18W = 5,76W. Diese aufgenommene Leistung speist der Schaltregler 30 zumindest teilweise auf das Potential GV aus. Die ausgespeiste Leistung errechnet sich zu P_{ab} = U_{GV} × I1. Die abgegebene Leistung P_{ab} wird innerhalb der Baugruppe durch den Schaltregler 30, insbesondere in seiner Ausführungsform als getakteter Hochsteller, aus der aufgenommene Leistung P_{auf32} erzeugt. Wenn diese Erzeugung mit einem Wirkungsgrad von z.B. 70% erfolgt, fällt in der Baugruppe 10 nur noch die Verlustleistung von 0,3 × 5,76W = 1,7W an. Aus der Stromversorgung P24 wird nur noch ein Strom 13 aufgenommen, der zur Deckung der Verluste benötigt wird.

Damit lässt sich die Erfindung kurz wie folgt darstellen:

Immer wenn ein Digitaleingang Strom aufnimmt, entsteht innerhalb der Baugruppe 10 eine Verlustleistung. Statt jedoch diese Verlustleistung in Wärme umzusetzen, ist gemäß der Erfindung vorgesehen, dass die Baugruppe 10 (oder, soweit der einzelne Eingangskanal betroffen ist, der jeweilige Eingangskanal) aus der eingespeisten Leistung eine Ausgangsspannung und/oder einen Ausgangsstrom, also elektrische Energie, erzeugt und damit praktisch als Stromversorgung arbeitet, die zumindest einen Teil der eingespeisten Leistung wieder abgibt (ausspeist) so dass ein Entstehen von Verlustleistungswärme baugruppenintern vermieden oder verringert wird.

## Patentansprüche

1. Peripheriebaugruppe für ein Automatisierungsgerät mit mindestens einem als Digitaleingang fungierenden Signalkontakt (14) zum Anschluss eines baugruppenexternen Sensors (18) zumindest an den Signalkontakt (14),
**gekennzeichnet durch**
zumindest einen Versorgungskontakt (12) zum Anschluss des Sensors (18) an die Peripheriebaugruppe (10) und Mittel (30) zur zumindest teilweisen Ausspeisung - Ausspeisungsmittel (30) - von über zumindest den Signalkontakt (14) einspeisbarer elektrischer Energie über den Versorgungskontakt (12),
wobei das oder die Ausspeisungsmittel (30) als Schaltregler ausgeführt ist bzw. ausgeführt sind.

2. Peripheriebaugruppe nach Anspruch 1,
wobei das oder die Ausspeisungsmittel (30) in seiner bzw. ihrer Form als Schaltregler zumindest einen getakteten Hochsteller mit Konstantstromsenke umfasst bzw. umfassen.

3. Peripheriebaugruppe nach Anspruch 1 oder 2,
wobei das oder die Ausspeisungsmittel (30) Verarbeitungsfunktionalität umfasst bzw. umfassen, derart dass anhand eines Überschreitens vorgegebener oder vorgebbarer Schwellwerte für eine Spannung, die im Betrieb zum Treiben eines Stroms über den Signalkontakt (14) erforderlich ist, der Status des an den Signalkontakt (14) angeschlossenen Sensors (18) erkennbar ist.

4. Peripheriebaugruppe nach Anspruch 3,
wobei in Abhängigkeit vom mittels der Verarbeitungsfunktionalität des Ausspeisungsmittels (30) erkennbaren Status des Sensors (18) ein Auswertezweig (20) ansteuerbar ist, der zum Transfer des erkannten Status des Sensors (18) an eine Verarbeitungseinheit (28) vorgesehen ist.

5. Peripheriebaugruppe nach Anspruch 4,
wobei der Auswertezweig (20) einen Optokoppler (26) umfasst.

6. Peripheriebaugruppe nach Anspruch 4 oder 5,
wobei der Auswertezweig (20) ein Anzeigeelement (24) umfasst.

7. Peripheriebaugruppe nach einem der vorangehenden Ansprüche,
wobei als Vorsorgungskontakt (12) ein erster und ein zweiter Versorgungskontakt (12', 12") vorgesehen ist,
wobei der erste Versorgungskontakt (12') zur Versorgung der Peripheriebaugruppe (10) mit elektrischer Energie vorgesehen ist,
wobei der zweite Versorgungskontakt (12") zur Ausspeisung elektrischer Energie durch das oder die Ausspeisungsmittel (30) und zum Anschluss des Sensors (18) vorgesehen ist,
wobei über den Signalkontakt (14) in das Ausspeisungsmittel (30) einspeisbare elektrische Energie zumindest teilweise über den zweiten Versorgungskontakt (12") ausspeisbar ist.

8. Peripheriebaugruppe nach Anspruch 7,
wobei das oder die Ausspeisungsmittel (30) zur Entnahme der über den zweiten Versorgungskontakt (12") ausspeisbaren elektrischen Energie von einem über den Signalkontakt (14) einspeisbaren Strom einerseits und von einem über den ersten Versorgungskontakt (12') einspeisbaren elektrischen Strom andererseits vorgesehen sind.

9. Verfahren zum Betrieb einer Peripheriebaugruppe nach einem der vorangehenden Ansprüche,
wobei das oder die Ausspeisungsmittel (30) einen Strom über den Signalkontakt (14) aufnimmt bzw. aufnehmen,wobei eine Auswertung eines Status eines an den Signalkontakt (14) angeschlossenen Sensors (18) anhand einer Spannung, die im Betrieb zum Treiben eines Stroms über den Signalkontakt (14) erforderlich ist, insbesondere anhand eines Überschreitens vorgegebener oder vorgebbarer Schwellwerte für eine sich ergebende Spannung, erfolgt und
wobei zumindest ein Teil des aufgenommenen Stroms durch das oder die Ausspeisungsmittel (30) über den Versorgungskontakt (12) wieder ausgespeist wird.

10. Verfahren nach Anspruch 9,
wobei zum Transfer des erkannten Status an eine Verarbeitungseinheit (28) je nach Status ein Auswertezweig (20) aktiviert oder deaktiviert wird, der einen Optokoppler (24) umfasst.

11. Verfahren nach Anspruch 10,
wobei der Auswertezweig (20) einen Optokoppler (22) und ein Anzeigeelement (24) umfasst.

## Claims

1. Input/output module for a programmable controller comprising at least one signalling contact (14) functioning as a digital input for connecting a sensor (18) which is external to the module at least to the signalling contact (14),
**characterised by**
at least one power supply contact (12) for connecting the sensor (18) to the input/output module (10) and means (30) for at least partially outputting - outputting means (30) - electrical energy which can be input via at least the signalling contact (14) via the power supply contact (12),
wherein the outputting means (30) is/are fashioned as switching regulators.

2. Input/output module according to claim 1,
wherein the outputting means (30) comprise(s) in its form as a switching regulator at least one clocked step-up converter with a constant-current sink.

3. Input/output module according to claim 1 or claim 2,
wherein the outputting means (30) comprise(s) processing functionality such that from a voltage which is required in operating mode for driving a current via the signalling contact (14), in particular from the exceeding of predetermined or predeterminable threshold values for the voltage that arises, the status of the sensor (18) connected to the signalling contact (14) can be recognised.

4. Input/output module according to claim 3,
wherein, depending on the status of the sensor (18) which can be recognised by means of the processing functionality of the outputting means (30), an evaluation branch (20) which is provided for transferring the recognised status of the sensor (18) to a processing unit (28) can be triggered.

5. Input/output module according to claim 4,
wherein the evaluation branch (20) comprises an optocoupler (26) .

6. Input/output module according to claim 4 or claim 5,
wherein the evaluation branch (20) comprises a display element (24) .

7. Input/output module according to any one of the preceding claims,
- wherein a first and a second power supply contact (12', 12") is provided as a power supply contact (12),
- wherein the first power supply contact (12') is provided for supplying the input/output module (10) with electrical energy,
- wherein the second power supply contact (12") is provided for outputting electrical energy through the outputting means (30) and for connecting the sensor (18),
- wherein electrical energy which can be input via the signalling contact (14) into the outputting means (30) can be output at least partially via the second power supply contact (12") .

8. Input/output module according to claim 7,
wherein the outputting means (30) are provided for removing the electrical energy which can be output via the second power supply contact (12") from a current which can be input via the signalling contact (14) on the one hand and from an electrical current which can be input via the first power supply contact (12') on the other hand.

9. Method for operating an input/output module according to any one of the preceding claims,
- wherein the outputting means (30) receive(s) a current via the signalling contact (14),
- wherein the evaluation of the status of a sensor (18) connected to the signalling contact (14) is made from a voltage which is required in operating mode for driving a current via the signalling contact (14), in particular from the exceeding of predetermined or predeterminable threshold values for the voltage which arises, and
- wherein at least some of the current received is output again by the outputting means (30) via the power supply contact (12).

10. Method according to claim 9,
wherein, in order to transfer the recognised status to a processing unit (28), an evaluation branch (20) is activated or deactivated depending on said status, which evaluation branch comprises in particular an optocoupler (24).

11. Method according to claims 10,
wherein the evaluation branch (20) comprises an optocoupler (22) and a display element (24).

## Revendications

1. Module périphérique pour un appareil automatisé comportant au moins un contact de signal ( 14 ) fonctionnant comme entrée numérique en vue du raccordement d'un capteur (18) externe au module au moins au contact de signal ( 14 ), **caractérisé par** au moins un contact d'alimentation (12) pour le raccordement du capteur ( 18 ) au module périphérique ( 10 ) et par des moyens ( 30 ) - moyens de fourniture d'énergie ( 30 ) - pour la fourniture au moins partielle d'énergie électrique, pouvant être introduite par l'intermédiaire de l'au moins un contact de signal ( 14 ), par l'intermédiaire du contact d'alimentation ( 12 ), le ou les moyens de fourniture d'énergie ( 30 ) étant réalisés comme des blocs d'alimentation à découpage.

2. Module périphérique suivant la revendication 1, dans lequel le ou les moyens de fourniture d'énergie ( 30 ) comprennent, dans leur forme de réalisation comme blocs d'alimentation à découpage, au moins un élévateur de tension à découpage avec puits de courant constant.

3. Module périphérique suivant la revendication 1 ou 2, dans lequel le ou les moyens de fourniture d'énergie ( 30 ) comprennent une fonctionnalité de traitement de telle sorte que, à l'aide d'un dépassement de valeurs de seuil prescrites ou pouvant être prescrites pour une tension qui est nécessaire lors du fonctionnement pour l'envoi d'un courant via le contact de signal ( 14 ), l'état du capteur ( 18 ) raccordé au contact de signal ( 14 ) est reconnaissable.

4. Module périphérique suivant la revendication 3, dans lequel une branche d'évaluation ( 20 ) est commandable en fonction de l'état du capteur ( 18 ) reconnaissable au moyen de la fonctionnalité de traitement du moyen de fourniture d'énergie ( 30 ), laquelle branche d'évaluation est prévue pour le transfert de l'état reconnu du capteur ( 18 ) vers une unité de traitement ( 28 ).

5. Module périphérique suivant la revendication 4, dans lequel la branche d'évaluation ( 20 ) comprend un coupleur optoélectronique ( 26 ).

6. Module périphérique suivant la revendication 4 ou 5, dans lequel la branche d'évaluation ( 20 ) comprend un élément d'affichage ( 24 ).

7. Module périphérique suivant l'une des revendications précédentes,
dans lequel il est prévu comme contact d'alimentation ( 12 ) un premier et un deuxième contact d'alimentation ( 12', 12" )
dans lequel le premier contact d'alimentation ( 12' ) est prévu pour l'alimentation du module périphérique ( 10 ) en énergie électrique,
dans lequel le deuxième contact d'alimentation ( 12" ) est prévu pour la fourniture d'énergie électrique par le ou les moyens de fourniture d'énergie ( 30 ) et pour le raccordement du capteur ( 18 ),
dans lequel de l'énergie électrique pouvant être introduite via le contact de signal ( 14 ) dans le moyen de fourniture d'énergie ( 30 ) peut être fournie au moins partiellement via le deuxième contact d'alimentation ( 12" ).

8. Module périphérique suivant la revendication 7, dans lequel le ou les moyens de fourniture d'énergie ( 30 ) sont prévus pour le prélèvement de l'énergie électrique, pouvant être fournie via le deuxième contact d'alimentation ( 12" ), d'une part d'un courant pouvant être introduit via le contact de signal ( 14 ) et d'autre part d'un courant électrique pouvant être introduit via le premier contact d'alimentation ( 12' ).

9. Procédé pour faire fonctionner un module périphérique suivant l'une des revendications précédentes,
dans lequel le ou les moyens de fourniture d'énergie ( 30 ) prélèvent un courant via le contact de signal ( 14 ), une évaluation d'un état d'un capteur ( 18 ) raccordé au contact de signal ( 14 ) s'effectuant à l'aide d'une tension qui est nécessaire lors du fonctionnement pour l'envoi d'un courant via le contact de signal ( 14 ), notamment à l'aide d'un dépassement de valeurs de seuil prescrites ou pouvant être prescrites pour une tension résultante, et
dans lequel au moins une partie du courant prélevé est à nouveau fournie par le ou les moyens de fourniture d'énergie ( 30 ) via le contact d'alimentation ( 12 ).

10. Procédé suivant la revendication 9, dans lequel, pour le transfert de l'état reconnu vers une unité de traitement ( 28 ), une branche d'évaluation ( 20 ) comprenant un coupleur optoélectronique ( 24 ) est activée ou désactivée selon ledit état.

11. Procédé suivant la revendication 10, dans lequel la branche d'évaluation ( 20 ) comprend un coupleur optoélectronique ( 22 ) et un élément d'affichage ( 24 ).
